# EUROPÄISCHE PATENTSCHRIFT

(11) **EP 0 790 507 B1**
(45) Veröffentlichungstag und Bekanntmachung des Hinweises auf die Patenterteilung: **02.06.1999**
(21) Anmeldenummer: 96102135.9
(22) Anmeldetag: 14.02.1996
(51) Int. Cl.: G01V 3/15

(54) **Metallsuchgerät mit verschwenkbarer Detektorspule die in einem frei wählbaren Neigungswinkel arretierbar ist**
Metal detector with pivoting detector coil, which is lockable in any position
Détecteur de métal avec une bobine de détection pivotable qui peut être arrêtée suivant un angle quelconque

(43) Veröffentlichungstag der Anmeldung: 20.08.1997
(73) Patentinhaber: Vallon GmbH, D-72800 Eningen (DE)
(72) Erfinder: Vallon, Gerhard, D-72800 Eningen u.A. (DE)
(74) Vertreter: Klocke, Peter, Dipl.-Ing.

(56) Entgegenhaltungen:
- AU-B- 531 761
- FR-A- 1 445 006
- US-A- 4 862 316
- FUNKSCHAU, Bd. 44, Nr. 4, Februar 1972, Seiten 121-123, XP002009406 H.P. WIERSMA: "Kabelsuchgerät"

## Beschreibung

Die Erfindung betrifft ein Metallsuchgerät gemäß der Gattung des Hauptanspruchs.

Zur Ortung metallischer Gegenstände im Erdreich werden Metallsuchgeräte verwendet, wie z.B. offenbart in US-A-4 862 316, die an einem Tragerohr eine bezüglich ihres Neigungswinkels verschwenkbare Detektorspule oder Detektorsonde besitzen. Beim Suchvorgang schreitet ein Sondenführer ein abzusuchendes Terrain ab, wobei je nach Ausrichtung des Geländes und Größe des Sondenführers ein ganz bestimmter Neigungswinkel zwischen Detektorspule und Tragerohr besonders günstig sein kann. Aus diesem Grunde besteht für derartige Metallsuchgeräte die Forderung, daß die Detektorspule mit einem einstellbaren Neigungswinkel am Tragerohr angebracht sein soll. Bei herkömmlichen Metallsuchgeräten wird diese Forderung jedoch nur bedingt erfüllt, da nach einer gewissen Gebrauchszeit die hierfür im Bereich der Detektorspule vorgesehenen Arretierhilfen infolge von eindringendem Schmutz unbrauchbar werden. Wird beispielsweise das Tragerohr so mit der Detektorspule verschraubt, daß die dabei vorgesehene Schraube selbst als Achse dient und der Andruck der Schraube auf die Befestigungsflächen die Arretierwirkung erzeugt, so bedingt die häufig auftretende starke Verschmutzung im Schraubenbereich ein Nachlassen der Arretierwirkung, so daß die Schraube immer wieder nachgezogen werden muß.

Der Erfindung liegt die Aufgabe zugrunde, ein Metallsuchgerät mit einer am unteren Ende eines Tragerohres angebrachten Detektorspule zu schaffen, bei dem die Detektorspule in einem gewünschten Neigungswinkel sicher arretierbar ist.

Die Lösung dieser Aufgabe erhält man durch die im Anspruch 1 angegebenen Merkmale. Durch die Verwendung eines Friktionselements, welches den Anforderungen entsprechende Reibflächen aufweisen kann, wird in Verbindung mit einem auf das Friktionselement einwirkenden Spannelement eine sehr stabile und dauerhafte Arretierung für jeden gewünschten Neigungswinkel erreicht. Besonders vorteilhaft ist es, das Friktionselement als Reibhülse auszubilden, die drehfest am Tragerohr befestigt ist und durch die die Querachse der Detektorspule hindurchgreift. Die Reibhülse, die aus Vulkanol oder einem anderen Reibmaterial hergestellt sein kann, umschließt die Querachse, so daß die wirksame Reibfläche optimal gegen eindringende Schmutzpartikel geschützt ist.

Die Reibhülse ist weiterhin vorzugsweise als austauschbares Verschleißteil ausgebildet und besitzt ein Drehsicherungselement, welches in eine entsprechende Aussparung oder Nut des Querlagers am Tragerohr eingreift. Nach längerem Gebrauch und einem möglicherweise auftretenden Verschleiß kann die Reibhülse sehr kostengünstig durch eine neue Reibhülse ausgetauscht werden.

Um die zur Arretierung erforderliche Spannkraft zwischen Reibhülse und Querachse zu erzeugen, kann das am Tragerohr ausgebildete Querlager mittels einer Spannschraube bezüglich seines Innendurchmessers elastisch veränderbar ausgebildet sein.

Die Erfindung wird nachfolgend anhand eines in der Zeichnung dargestellten Ausführungsbeispiels näher erläutert.

Es zeigen:
- Figur 1: ein Metallsuchgerät im Bereich des unteren Endes des Tragerohrs und die Detektorspule vor der Befestigung am Tragerohr und
- Figur 2: die Draufsicht auf die Detektorspule von Figur 1.

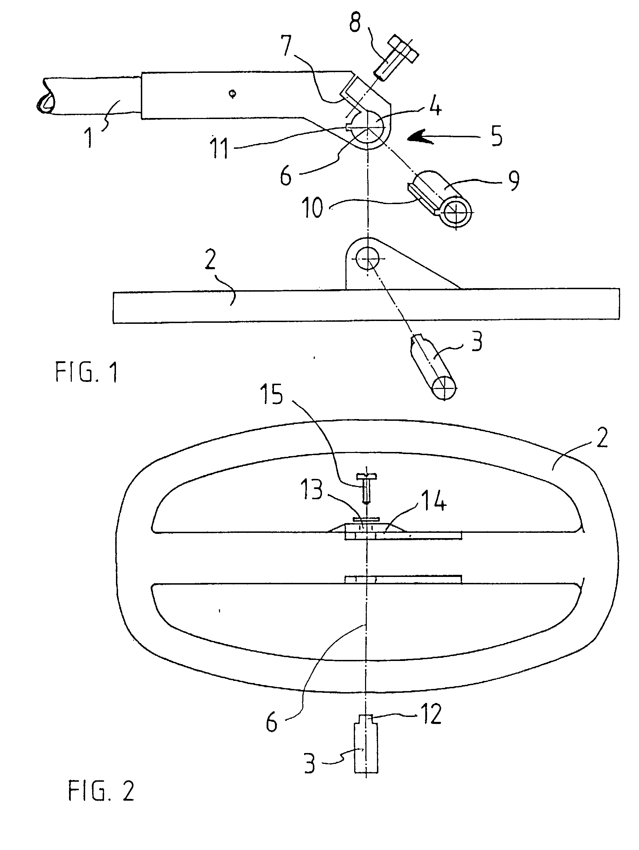

Das in Figur 1 dargestellte Metallsuchgerät besteht aus einem Tragerohr 1 und einer Detektorspule 2, die mittels einer Querachse 3 an einem Querlager 4 des Tragerohrs 1 schwenkbar befestigt wird. Die Detektorspule 2 befindet sich dann am unteren Ende 5 des Tragerohrs 1 und kann um die Querachse 6 in unterschiedliche Neigungswinkel bezüglich des Tragerohrs 1 verschwenkt werden.

Das Querlager 4 ist am Tragerohr 1 als Querbohrung mit einem nach außen verlaufenden Schlitz 7 ausgeführt. Eine Spannschraube 8 dient dazu, den Innendurchmesser des Querlagers 4 so zu verkleinern, daß ein in die Querbohrung 4 eingesetztes Friktionselement 9 gegen die Querachse 3 verspannt werden kann. Das Friktionselement 9 ist drehfest in dem Querlager 4 gelagert und greift zu diesem Zweck mit einem als Längssteg ausgebildeten Drehsicherungselement 10 in eine als Nut ausgebildete Aussparung 11 am Tragerohr 1 ein.

In Figur 2 ist insbesondere die Anbringung der Querachse 3 ersichtlich, die mit einem Fortsatz 12 formschlüssig in eine entsprechend geformte Aussparung 13 an der Halterung 14 der Detektorspule 2 eingreift. Die Querachse 3 wird dabei mittels einer Befestigungsschraube 15 lösbar mit der Halterung 14 verbunden.

Es besteht grundsätzlich auch die Möglichkeit, die Querachse 3 als Friktionselement auszubilden, wobei das Friktionselement 9 dann als längsgeschlitzte Lagerbuchse oder wie in Figur 1 dargestellt als Reibhülse ausgebildet sein kann.

## Patentansprüche

1. Metallsuchgerät mit einer am unteren Ende eines Tragerohres (1) um eine quer zur Längsrichtung des Metallsuchgeräts verlaufende Schwenkachse verschwenkbar angebrachten Detektorspule (2) die in mit Bezug auf das Tragerohr (1) in einem frei wählbaren Neigungswinkel arretierbar ist, **dadurch gekennzeichnet**, daß einerseits an der Detektorspule (2) eine gegenüber der Detektorspule (2) nicht drehbare, starre Querachse (3) und andererseits an dem unteren Ende (5) des Tragerohrs (1) ein Querlager (4) zur Aufnahme der Querachse (3) ausgebildet ist, und daß zwischen Querachse (3) und Querlager (4) ein verspannbares Friktionselement (9) wirksam ist.

2. Metallsuchgerät nach Anspruch 1, **dadurch gekennzeichnet,** daß das Friktionselement (9) eine Reibhülse ist, die drehfest am Tragerohr (1) befestigt ist und mittels eines Spannelements (8) radial gegen die durch die Reibhülse hindurchgreifende Querachse (3) der Detektorspule (2) verspannbar ist.

3. Metallsuchgerät nach Anspruch 2, **dadurch gekennzeichnet,** daß die Reibhülse ein an ihrer Umfangsfläche abstehendes Drehsicherungselement (10) hat, das in eine Aussparung (11) des Querlagers (4) eingreift.

4. Metallsuchgerät nach einem der vorhergehenden Ansprüche, **dadurch gekennzeichnet**, daß das Querlager (4) als Querbohrung mit einem mittels einer Spannschraube (8) elastisch veränderbaren Durchmessers ausgebildet ist.

5. Metallsuchgerät nach Anspruch 2, **dadurch gekennzeichnet,** daß die Reibhülse eine Vulkanolhülse ist.

6. Metallsuchgerät nach einem der Ansprüche 2 bis 5, **dadurch gekennzeichnet,** daß die Reibhülse und/oder die Querachse (3) als austauschbare Verschleißteile lösbar mit dem Tragerohr (1) bzw. mit der Detektorspule (2) verbunden sind.

## Claims

1. Metal-searching apparatus with a detector coil at the lower end of a carrier tube (1) pivotally attached to a pivotal axis extending transversely to the longitudinal direction of the metal-searching apparatus, said detector coil (2) being lockable at a freely selectable angle of inclination with respect to the carrier tube (1), characterised in that on the one hand there is formed on the detector coil (2) a rigid transverse axis (3) which is not rotatable relative to the detector coil (2), and on the other hand, at the lower end (5) of the carrier tube (1), a transverse bearing (4) for receiving the transverse axis (3), and in that a clampable friction member (9) is effective between the transverse axis (3) and the transverse bearing (4).

2. Metal-searching apparatus according to claim 1, characterised in that the friction member (9) is a friction sleeve, which is non-rotarily attached to the carrier tube (1) and may be clamped by means of a clamp member (8) radially against the transverse axis (3) of the detector coil (2) passing through the friction sleeve.

3. Metal-searching apparatus according to claim 2, characterised in that the friction sleeve has an antirotation member (10) projecting out from its peripheral surface, and which engages in a recess (11) of the transverse bearing (4).

4. Metal-searching apparatus according to one of the preceding claims, characterised in that the transverse bearing (4) is in the form of a transverse bore with a diameter which is resiliently alterable by means of a clap screw (8).

5. Metal-searching apparatus according to claim 2, characterised in that the friction sleeve is a Vulcanol sleeve.

6. Metal-searching apparatus according to one of claims 2 to 5, characterised in that the friction sleeve and/or the transverse axis (3) are detachably connected as wearing parts with the carrier tube (1) or with the detector coil (2).

## Revendications

1. Détecteur de métaux comprenant une bobine de détection (2) montée avec une aptitude de pivotement à l'extrémité inférieure d'un manche tubulaire (1) autour d'un pivot orienté transversalement au sens de la longueur du détecteur de métaux, bobine qui peut être arrêtée suivant un angle quelconque par rapport au manche tubulaire (1), caractérisé en ce que sur la bobine de détection (2), d'une part, on prévoit un axe transversal (3) rigide incapable de tourner par rapport à la bobine de détection (2), et d'autre part, à l'extrémité inférieure (5) du manche tubulaire (1), un palier transversal (4) qui réceptionne l'axe transversal (3), et en ce qu'un élément de friction (9) déformable agit entre l'axe transversal (3) et le palier transversal (4).

2. Détecteur de métaux selon la revendication 1, caractérisé en ce que l'élément de friction (9) est une douille de friction qui est fixée sans pouvoir tourner au manche tubulaire (1) et qui peut être déformée radialement au moyen d'un élément de serrage (8), contre l'axe transversal (3) de la bobine de détection (2) traversant la douille de friction.

3. Détecteur de métaux selon la revendication 2, caractérisé en ce que la douille de friction présente un élément de blocage en rotation (10) en saillie sur sa face périphérique, qui s'engage dans un évidement (11) du palier transversal (4).

4. Détecteur de métaux selon l'une des revendications précédentes, caractérisé en ce que le palier transversal (4) est réalisé sous forme de perçage transversal de diamètre élastiquement variable au moyen d'une vis de serrage (8).

5. Détecteur de métaux selon la revendication 2, caractérisé en ce que la douille de friction est une douille Vulcanol.

6. Détecteur de métaux selon l'une des revendications 2 à 5, caractérisé en ce que la douille de friction et/ou l'axe transversal (3) sont raccordés au manche tubulaire (1) et à la bobine de détection (2), respectivement, de façon à pouvoir être démontés comme des pièces d'usure remplaçables.
